# EUROPEAN PATENT SPECIFICATION

(11) **EP 1 171 876 B1**
(45) Date of publication and mention of the grant of the patent: **12.03.2003**
(21) Application number: 00921834.8
(22) Date of filing: 07.04.2000
(51) Int. Cl.: G11B 7/12

(54) **LASER LENS CLEANER**
LASER-LINSENREINIGER
NETTOYEUR DE LENTILLES LASER

(30) Priority: 07.04.1999 US 287952
(43) Date of publication of application: 16.01.2002
(73) Proprietor: Allsop, Inc., Bellingham, Washington 98226 (US)
(72) Inventor: ESAREY, Graeme, D., Seattle, Washington 98107 (US); WANG, Rosa, Pan Chiao City, Taipei Hsien (TW)
(74) Representative: Kelly, Peter F.
(86) International application number: US0009253
(87) International publication number: WO00060585

(56) References cited:
- EP-A- 0 770 994
- US-A- 5 499 228
- PATENT ABSTRACTS OF JAPAN vol. 017, no. 445 (P-1593), 16 August 1993 (1993-08-16) & JP 05 094631 A (NIPPON SEIKI HOUSEKI KOGYO KK), 16 April 1993 (1993-04-16)
- PATENT ABSTRACTS OF JAPAN vol. 017, no. 536 (P-1620), 27 September 1993 (1993-09-27) & JP 05 144057 A (MATSUSHITA ELECTRIC IND CO LTD), 11 June 1993 (1993-06-11)
- PATENT ABSTRACTS OF JAPAN vol. 009, no. 163 (P-371), 9 July 1985 (1985-07-09) & JP 60 040537 A (MATSUSHITA DENKI SANGYO KK), 2 March 1985 (1985-03-02)
- PATENT ABSTRACTS OF JAPAN vol. 016, no. 163 (P-1341), 21 April 1992 (1992-04-21) & JP 04 011372 A (HIROSHI NAKAGAWA), 16 January 1992 (1992-01-16)

## Description

### Field of the invention

This invention relates to lens cleaners and, more specifically, a cleaner for removing foreign particles and static build-up from a disc player laser lens.

### Background of the invention

A disc player for compact discs (CDs), video laser discs (LDs), and digital video discs (DVDs) typically includes an optical pick-up for reading data on the disc. The pick-up is provided with an optical system including a semiconductor laser with an objective lens, a light detector for receiving light reflected from the information recording surface of the disc, and a focus actuator for controlling the position of the objective lens in the optical axis direction against the information recording surface of the disc. The pick-up also includes a tracking actuator for controlling the position of the light beam spot originating from the pick-up in the disc radius direction against the information recording surface. The tracking actuator utilizes a focus error signal generation circuit to drive the objective lens along the optical axis in a direction corresponding to the track of data on the information recording surface. In this manner, the semiconductor laser maintains contact with the data track on the disc, and skips, or jumps through the data track, are avoided.

Frequently, dust or dirt can accumulate on the objective lens for the semiconductor laser and cause the laser lens to block full illumination of the laser. If such dirt or dust become too thick, the intensity of the laser can be minimized to a point where the tracking actuator cannot properly follow the data track of the disc. In addition, accumulated dirt or dust can affect the clarity of the sound or picture provided by the information recording surface of the disc.

In addition to accumulation of dust and debris, the optical lens can develop a build-up of static. It is possible that such static build-up could ultimately result in electrical shorting of the disc drive equipment or damage to the optical lens.

There exists a need for a method of removing dust and debris and static build-up from the optical lens of a disc player. Preferably, such a method can be performed by a consumer so that the disc player does not have to be serviced by a skilled technician, which could be inexpensive and time-consuming.

Reference is made to European Patent Specification EP-A-0 770 994 which forms part of the prior art. EP-A-0 770 994 discloses a cleaning device for the optical lens of a disc player consisting of a disc which is shaped to be received within and played by the disc player. The disc has bottom and top surfaces and a brush extends down from the bottom surface and is configured so as to engage the optical lens of the disc player when the disc is within the player. The brush is made of a conductive material. The disc is provided with a conductive coating.

### Summary of the invention

The present invention provides a lens cleaner for a disc player. The lens cleaner includes a disc shaped to be received within and played by a disc player, the disc having bottom and top sides. A brush extends downward from the bottom side of the disc and is configured so as to engage an optical lens of a disc player when the disc is within a disc player. The brush is configured so that it gently wipes the optical lens when the disc is rotated by the disc player.

In accordance with one aspect of the invention, the disc includes a data track located radially inward from the brush. A second data track can be provided that is spaced radially outward from the brush.

Preferably, the brush is formed from conductive material, and more preferably, carbon fiber. A conductive label can be provided on the top of the disc, that is conductively linked to the conductive brush. A user can discharge static build-up within the disc player by touching the conductive label.

In accordance with another aspect of the present invention, at least one additional brush extends downward from the bottom side of the disc so that there are a plurality of brushes extending downward from the disc. Preferably, the plurality of brushes form distinct groups of brushes spaced around the disc.

### Brief description of the drawings

The foregoing aspects and many of the attendant advantages of this invention will become more readily appreciated as the same become better understood by reference to the following detailed description, when taken in conjunction with the accompanying drawings, wherein:
FIGURE 1 is an exploded side perspective view of the lens cleaner of the present invention;
FIGURE 2 is a bottom view of the lens cleaner of FIGURE 1;
FIGURE 3 is a side view of the lens cleaner of FIGURE 1;
FIGURE 4 is a bottom, diagrammatic perspective view of the lens cleaner of FIGURE 1, shown with the user discharging static through the lens cleaner from a disc player;
FIGURE 5 is a top pictorial view of the lens cleaner of FIGURE 1, with the lens cleaner loaded in a disc player and the disc of the lens cleaner shown as transparent for detail; and
FIGURE 6 is a diagram showing operation of the lens cleaner of FIGURE 1.

### Detailed Description of the Preferred Embodiment

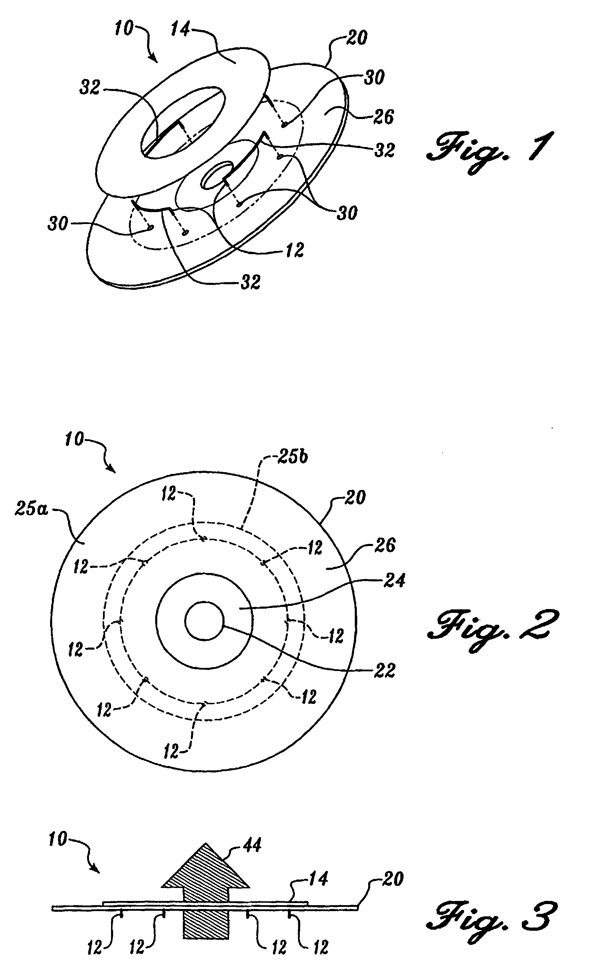

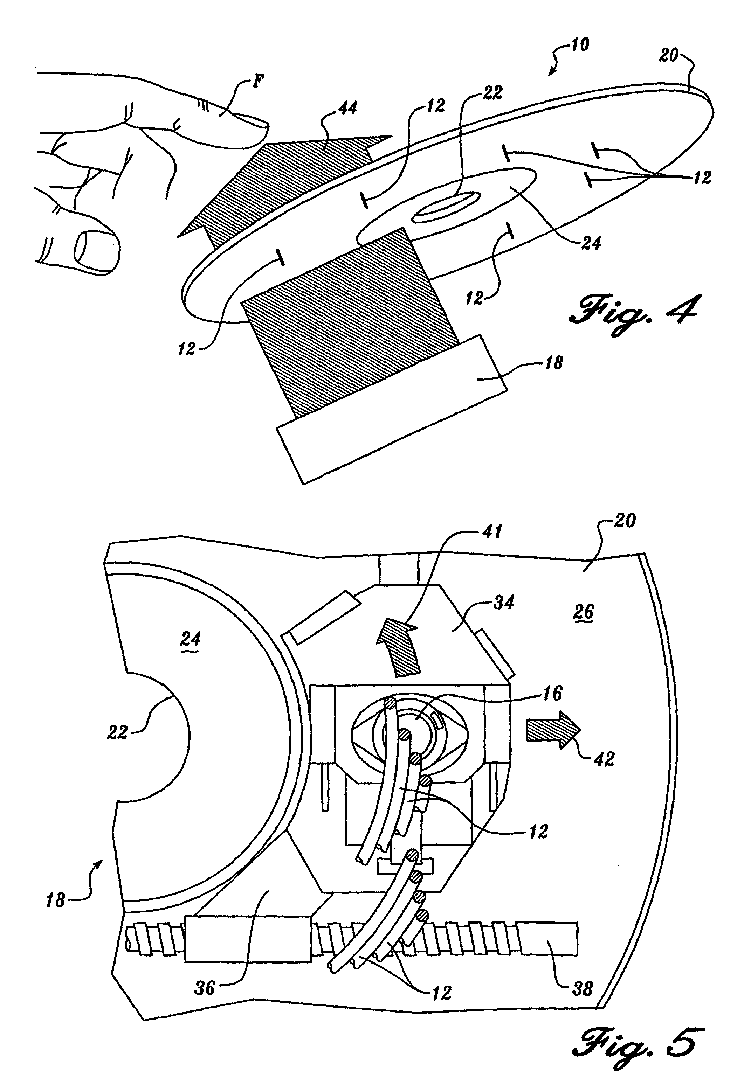

Referring now to the drawing, in which like reference numerals represent like parts throughout the several views, FIGURE 1 shows an exploded perspective view of a lens cleaner 10 embodying the present invention. Briefly described, the lens cleaner 10 includes brushes 12 (FIGURE 3) extending out of its bottom side and a conductive label 14 (FIGURE 1) on its top side. The brushes 12 sweep the optical lens 16 (FIGURE 5) of a disc player 18 during rotation of the lens cleaner 10. In addition, the conductive label 12 can be touched by a user's finger F (FIGURE 4) so as to discharge static from the disc player 18 through the brushes 12 and the lens cleaner 10 and out of the disc player 18.

The lens cleaner 10 includes a disc 20 that is the shape of and formed from the same material as a conventional compact disc. The disc 20 includes an aperture 22 in its center, a clear aperture ring 24 outside the aperture, and an information recording surface 26, in the form of data tracks (two shown at 25a and 25b in FIGURE 2) or a continuous data track (not shown but known in the art), spaced radially outward from the aperture ring 24.

The disc 20 described thus far includes all of the features of a conventional compact disc. In addition, however, the disc 20 includes eight holes 30 spaced circumferentially about the disc and extending orthogonal through the plane of the disc. The holes 30 are preferably each spaced radially from the center of the disc 20 approximately 3.1 centimeters, and are evenly spaced on a ring about the disc 20.

Conductive brush material 32 (FIGURE 1) is bent into a U shape so that the brushes 12 are formed by the outer prongs of the U. The brushes 12 of the conductive brush material 32 are extended through the holes 30 and the disc 20 so that the brushes 12 extend out of the bottom side of the disc (FIGURE 3).

The conductive brush material 32 is preferably carbon fibers, and in the embodiment shown is eight carbon fibers for each conductive brush material 32. Other materials can be used for the conductive brush material on the brushes 12, but preferably a material that is flexible so that it will not damage the optical lens 16 of the disc player 18. It is also preferred that the conductive brush material 32 be formed of material that is conductive, although another material which only performs a cleaning function could also be used. Although applicants have found that an exemplary material to use for the conductive brush material is carbon fibers, other materials can be used.

After the brushes 12 of the conductive brush material 32 are extended through the holes 30 on the disc 20, the cross-piece (top) of the U extends against the top surface of the disc 20. The conductive label 14 is then attached over the conductive brush material 32 and against the information recording surface 26. The conductive label 14 is preferably formed of aluminum or another conductive metal, but other materials can be used. The conductive label 14 can be glued to the disc 20 or adhered in any suitable fashion. Importantly, however, the contact between the conductive label 14 and the conductive brush material 32 is not blocked by adhesive.

The lens cleaner 10 is shown as inserted in the disc player 18 in FIGURE 5. The disc player 18 includes an optical pick-up 34 onto which the optical lens 16 is mounted. The optical pick-up 34 is mounted to a slider 36 that includes female threads (not shown) that are threaded onto a male-threaded drive rod 38. In operation, the disc player 18 causes a disc to spin, and a semiconductor laser (not shown, but well-known in the art) emits a beam through the optical lens 16 and a tracking actuator (not shown, but well-known in the art) causes the beam to follow data tracks on the information recording surface of a disc that is located on the disc player 18. As the disc is rotated by the drive mechanism of the disc player 18, the tracking actuator follows the data tracks on the disc by causing the drive rod 38 to rotate to move the slider 36 inward or outward.

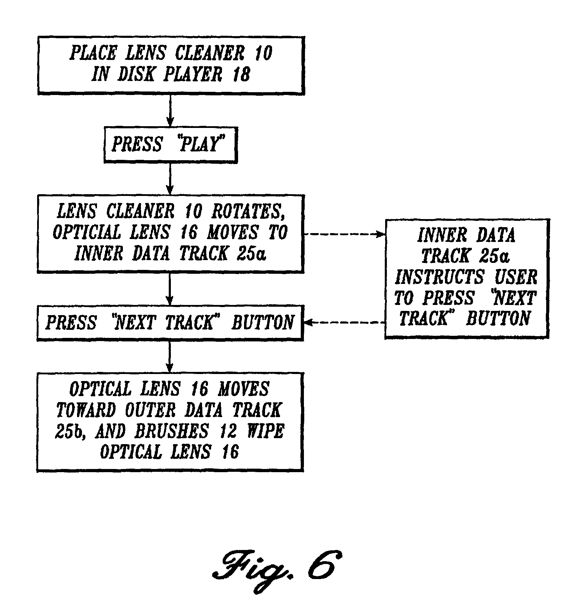

Operation of the lens cleaner 10 is depicted in FIGURE 6. To begin cleaning, the lens cleaner 10 is placed in the disc player 18 and the play button (not shown) of the disc player 18 is depressed. The disc 20 is then rotated by the disc player 18 (shown by arrow 41 in FIGURE 5), and the optical pick-up 34 begins to read data on the information recording surface 26 of the disc. During this reading process, the optical lens 16 is aligned with the data tracks that are being read on the information recording surface 26. As the optical lens 16 moves outward as indicated by the arrow 42 in FIGURE 5, the optical lens eventually aligns with the rotating brushes 12, and the brushes contact and gently wipe against the top surface of the optical lens.

In order for the disk 20 to rotate and the optical lens 16 to move slowly outward, it is preferred that at least some data be recorded on the information recording surface 26. Data tracks 25a, 25b can be provided on opposite sides of the holes 30, and the brushes 12 can wipe against the optical lens 16 as it moves between tracks. To properly direct the optical lens 16 underneath the rotating brushes 12, a first inner track 25a on the information recording surface 26 can be read by the optical pick-up 34, and then instructions on the information recording surface 26 (played through the audio components of the disc player 18) can direct the user to advance a track on the disc player 18 to a track 25b located just outside the brushes 12. As the optical lens 16 moves to the outer track 25b, the brushes 12 contact and gently wipe against the top surface of the optical lens. Then, as the outer data track 25b is encountered by the optical pick-up 34, the optical lens 16 slows its movement outward and once again follows the respective data track 25b.

If desired, the data tracks 25a, 25b on the lens cleaner 10 can provide instructions for the cleaning operation of the lens cleaner. In this manner, a user can properly use the lens cleaner 10, and a minimal amount of written instructions need to be provided with the lens cleaner.

Other designs for the disc 20 are contemplated in which the information recording surface 26 includes only a data track located outside the brushes so that the optical lens is cleaned by the brushes 12 before reading of data, or in which a data track is included inside before the brushes 12. A disc 20 could also be provided in which there is no information on the information recording surface 26, and the optical pick-up, in searching for data, is wiped by the brushes 12. However, the disc 20 shown in FIGURE 6 is a preferred embodiment of the invention because it offers an opportunity for instruction for a user, and assures that the optical lens 16 moves through the rotating brushes 12.

Before or after cleaning, and while the cleaning disc 10 is on the disc player 18, a user presses a finger F (FIGURE 4) against the conductive label 14 so as to disperse static electricity within the disc player 18 through the user's finger F, which acts as a ground. The static build-up is removed in the direction of the arrow 44 (FIGURES 3 and 4). The static electricity moves through the brushes 12 and the conductive brush material 32, through the conductive label 14, and into the ground (the finger F). In this manner, potentially harmful static electricity is removed from the disc player 18.

The present invention provides an infinite number of cleanings with little wear. The brushes 12, because they are made of carbon, experience very little wear upon cleaning of the optical lens 16. Static dispersion by use of the conductive label 14 also causes minimum wear.

While the preferred embodiment of the invention has been illustrated and described with reference to preferred embodiments, it will be appreciated that various changes can be made therein, the scope of the invention being defined in the appended claims.

## Claims

1. A lens cleaner comprising:
a disc shaped to be received within and played by a disc player, the disc having bottom and top sides;
a brush of conductive material extending downward from the bottom side of the disc and configured so as to engage an optical lens of a disc player when the disc is within a disc player;and
a conductive label conductively linked to the brush to disperse static electricity within a disc player and the disc.

2. The lens cleaner of Claim 1, wherein the disc comprises a data track located radially inward from the brush.

3. The lens cleaner of Claim 2, wherein the disc comprises a data track located radially outward from the brush.

4. The lens cleaner of Claim 1, wherein the disc comprises a data track located radially outward from the brush.

5. The lens cleaner of Claim 1, wherein the brush comprises carbon fiber.

6. The lens cleaner of any preceding Claim, further comprising at least one additional brush of conductive material extending downward from the bottom side of the disc so that there are a plurality of brushes extending downward from the disc.

7. The lens cleaner of Claim 6, wherein the plurality of brushes comprise distinct groups of brushes spaced around the disc.

8. The lens cleaner of Claim 6, wherein the disc comprises a data track located radially inward from the plurality of brushes .

9. The lens cleaner of Claim 6, wherein the disc comprises a data track located radially outward from the plurality of brushes .

10. The lens cleaner of Claim 6, wherein the plurality of brushes comprise carbon fiber.

11. The lens cleaner of Claim 6, wherein the conductive label is disposed on the top side of the disc and is conductively linked to the plurality of brushes.

12. The lens cleaner of Claim 7, wherein the distinct groups of brushes are spaced approximately the same distance from the center of the disc.

13. The lens cleaner of any one of claims 6-12, wherein the plurality of brushes each comprise conductive material.

14. A lens cleaner according to any preceding Claim wherein there is provided
means for repositioning an optical lens of a disc player relative to the brush to cause the brush to engage an optical lens.

## Patentansprüche

1. Linsenreiniger, der umfasst:
eine Platte, die so geformt ist, dass sie in ein Plattenabspielgerät eingegeben und mit diesem abgespielt werden kann, wobei die Platte eine untere und eine obere Seite aufweist;
eine Bürste aus leitfähigem Material, die sich abwärts von der unteren Seite der Platte erstreckt und so konfiguriert ist, dass sie eine optische Linse eines Plattenabspielgeräts erfasst, wenn sich die Platte in einem Plattenabspielgerät befindet; und
ein leitfähiges Etikett, das leitfähig mit der Bürste verbunden ist, um statische Elektrizität innerhalb eines Plattenabspielgeräts und innerhalb der Platte zu dispergieren.

2. Linsenreiniger nach Anspruch 1, wobei die Platte eine Datenspur umfasst, die radial einwärts von der Bürste angeordnet ist.

3. Linsenreiniger nach Anspruch 2, wobei die Platte eine Datenspur umfasst, die radial auswärts von der Bürste angeordnet ist.

4. Linsenreiniger nach Anspruch 1, wobei die Platte eine Datenspur umfasst, die radial auswärts von der Bürste angeordnet ist.

5. Linsenreiniger nach Anspruch 1, wobei die Bürste Kohlenstofffaser enthält.

6. Linsenreiniger nach einem der vorhergehenden Ansprüche, der weiterhin mindestens eine zusätzliche Bürste aus leitfähigem Material umfasst, die sich abwärts von der unteren Seite der Platte erstreckt, so dass eine Vielzahl von Bürsten vorhanden ist, die sich abwärts von der Platte erstrecken.

7. Linsenreiniger nach Anspruch 6, wobei die Vielzahl von Bürsten einzelne Bürstengruppen umfasst, die um die Platte herum beabstandet sind.

8. Linsenreiniger nach Anspruch 6, wobei die Platte eine Datenspur umfasst, die radial einwärts von der Vielzahl der Bürsten angeordnet ist.

9. Linsenreiniger nach Anspruch 6, wobei die Platte eine Datenspur umfasst, die radial auswärts von der Vielzahl der Bürsten angeordnet ist.

10. Linsenreiniger nach Anspruch 6, wobei die Vielzahl der Bürsten Kohlenstofffaser enthält.

11. Linsenreiniger nach Anspruch 6, wobei das leitfähige Etikett auf der oberen Seite der Platte angeordnet und leitfähig mit der Vielzahl der Bürsten verbunden ist.

12. Linsenreiniger nach Anspruch 7, wobei die einzelnen Bürstengruppen etwa um denselben Abstand von der Mitte der Platte beabstandet sind.

13. Linsenreiniger nach einem der Ansprüche 6 bis 12, wobei jede Bürste der Vielzahl von Bürsten leitfähiges Material enthält.

14. Linsenreiniger nach einem der vorhergehenden Ansprüche, wobei ein Mittel zur Neupositionierung einer optischen Linse eines Plattenabspielgeräts im Verhältnis zur Bürste bereitgestellt ist, damit die Bürste eine optische Linse erfasst.

## Revendications

1. Nettoyeur de lentille comprenant :
un disque conformé pour être reçu dans et lu par un lecteur de disques, le disque ayant des côtés inférieur et supérieur ;
un balai de matière conductrice s'étendant vers le bas depuis le côté inférieur du disque et configuré pour engager une lentille optique d'un lecteur de disques quand le disque se trouve dans un lecteur de disques ; et
une étiquette conductrice liée conductivement au balai afin de disperser l'électricité statique dans un lecteur de disques et le disque.

2. Nettoyeur de lentille selon la revendication 1, dans lequel le disque comprend une piste de données située radialement à l'intérieur par rapport au balai.

3. Nettoyeur de lentille selon la revendication 2, dans lequel le disque comprend une piste de données située radialement à l'extérieur par rapport au balai.

4. Nettoyeur de lentille selon la revendication 1, dans lequel le disque comprend une piste de données située radialement à l'extérieur par rapport au balai.

5. Nettoyeur de lentille selon la revendication 1, dans lequel le balai comprend de la fibre de carbone.

6. Nettoyeur de lentille selon l'une quelconque des revendications précédentes, comprenant en outre au moins un balai supplémentaire de matière conductrice s'étendant vers le bas depuis le côté inférieur du disque si bien qu'une pluralité de balais s'étendent vers le bas depuis le disque.

7. Nettoyeur de lentille selon la revendication 6, dans lequel la pluralité de balais comprend des groupes distincts de balais espacés autour du disque.

8. Nettoyeur de lentille selon la revendication 6, dans lequel le disque comprend une piste de données située radialement à l'intérieur par rapport à la pluralité de balais.

9. Nettoyeur de lentille selon la revendication 6, dans lequel le disque comprend une piste de données située radialement à l'extérieur par rapport à la pluralité de balais.

10. Nettoyeur de lentille selon la revendication 6, dans lequel la pluralité de balais comprend de la fibre de carbone.

11. Nettoyeur de lentille selon la revendication 6, dans lequel l'étiquette conductrice est disposée sur le côté supérieur du disque et est liée conductivement à la pluralité de balais.

12. Nettoyeur de lentille selon la revendication 7, dans lequel les groupes distincts de balais sont approximativement équidistants par rapport au centre du disque.

13. Nettoyeur de lentille selon l'une quelconque des revendications 6 à 12, dans lequel la pluralité de balais comprennent chacun une matière conductrice.

14. Nettoyeur de lentille selon l'une quelconque des revendications précédentes, dans lequel est fourni un moyen pour repositionner une lentille optique d'un lecteur de disque par rapport au balai afin de forcer le balai à engager une lentille optique.
